# EUROPEAN PATENT APPLICATION

(11) **EP 4 725 660 A1**
(43) Date of publication of application: **15.04.2026**
(21) Application number: 25208237.5
(22) Date of filing: 13.10.2025
(51) Int. Cl.: B25J 9/16, G05B 19/418, G05B 13/02

(54) **SYSTEMS AND METHODS FOR OPTIMIZING MATERIAL PROCESSING OPERATIONS**

(30) Priority: 14.10.2024 US 202463706942 P; 07.09.2025 US 202519321245
(71) Applicant: Lincoln Global, Inc., Cleveland, OH 44117 (US)
(72) Inventor: WILLIAMS, Christopher J., Norham, TD15 2JY (GB)
(74) Representative: Hoyng Rokh Monegier B.V.

(57) **Abstract**

A control system for a material processing application includes a sensor device and a controller. The sensor device is configured to receive actual motion data and actual process data from equipment performing the material processing application. The controller includes logic to determine adjusted motion parameters and adjusted process parameters based on the actual motion data and the actual process data, and execute the adjusted motion parameters and the adjusted process parameters to achieve a performance target.

## Description

### FIELD OF THE INVENTION

The present disclosure relates to systems and methods for material processing operations, and more particularly, a control system configured to receive sensor data and determine, via an artificial intelligence (AI) model, adjusted operating parameters based on the sensor data to achieve a performance target of the material processing operation.

### BACKGROUND OF THE INVENTION

Material processing operations (i.e., arc welding, laser welding, thermal cutting, laser cutting, plasma cutting, etc.) require repeatability to ensure that parts or products produced therefrom are of consistent quality. Many material processing operations are automated to improve repeatability and increase product throughput. For instance, many welding and thermal cutting applications employ a robot that manipulates a welding gun to perform one or more welds on materials to be joined, or a cutting torch to produce one or more cuts on a target material. Such applications may also utilize other forms of automation, such as material handling robots for placing one or more workpieces on a fixture, table, or positioner configured to secure the workpieces thereto during such operations. However, automating such operations does not always achieve the desired repeatability or product throughput due to external factors, for example, deviations in the workplace environment (e.g., temperature, air quality, etc.), in the status of the equipment utilized (e.g., based on wear or component failures), or in the materials being processed. For example, one workpiece may differ from another of the same kind dimensionally, metallurgically, or in other ways, e.g., based on differences in roughness (e.g., unevenness) or the presence of contaminants thereon. There also may be deviations in the supplies, components, and accessories required to execute such operations, for example, deviations in cutting assist gases or shielding gases, welding or cutting consumables, or welding or cutting gun/torch components used. In many instances, such deviations may not be discernable to the human eye, and addressing such issues would require extensive downtime inhibiting productivity, for example, to reprogram a robot's planned motion path or adjusting process parameters (e.g., welding or cutting parameters). Moreover, these problems may be exacerbated by other issues, such as misalignment (e.g., deviations in fit-up between workpieces to be processed). Accordingly, there is a need for a solution configured to account for such deviations in real time, thereby ensuring that the desire target performance attribute(s) of the material processing operation (e.g., throughput, operating cost, repeatability) are achieved.

### BRIEF SUMMARY OF THE INVENTION

The following summary presents a simplified summary in order to provide a basic understanding of some aspects of the devices, systems and/or methods discussed herein. This summary is not an extensive overview of the devices, systems and/or methods discussed herein. It is not intended to identify critical elements or to delineate the scope of such devices, systems and/or methods. Its sole purpose is to present some concepts in a simplified form as a prelude to the more detailed description that is presented later.

In accordance with an aspect of the present disclosure, a control system for a material processing application includes a sensor device and a controller. The sensor device is configured to obtain actual motion data and actual process data derived from equipment performing the material processing application. The controller includes logic to determine, via an artificial intelligence model, adjusted motion parameters and adjusted process parameters based on the actual motion data and the actual process data, and execute, via the equipment, the adjusted motion parameters and the adjusted process parameters to achieve a performance target.

In an embodiment, the artificial intelligence model is a neural network including an input layer, at least one hidden layer, and an output layer.

In an embodiment, the sensor device is configured to receive workplace data during the material processing application, and the controller includes logic to determine the adjusted motion parameters and the adjusted process parameters based on the actual motion data, the actual process data, and the actual workplace data.

In an embodiment, the workplace data includes at least one of a workpiece data, supply data or environment data.

In an embodiment, the equipment includes at least one of a robot, a torch, a positioner, a power source, a laser source, a cutting table, a cutting torch, a plasma source, or an oxygen/fuel source.

In an embodiment, the control system includes an image capturing device configured to retrieve spatial data, and the controller includes logic to determine workpiece information based on the spatial data.

In an embodiment, the control system includes an image capturing device configured to retrieve spatial data, and the controller is configured to determine planned motion parameters and planned process parameters via the spatial data.

In an embodiment, the controller includes logic to generate generative content embodying work instructions based on the adjusted motion parameters or the adjusted process parameters.

In an embodiment, the controller includes a time stamping component configured to receive and time stamp the actual process data and actual motion data for subsequent retrieval.

In an embodiment, the sensor device is configured to receive workplace data during the material processing application, and the controller includes a replay component configured to reproduce the actual process data, the actual motion data, and the workplace data in temporal synchronization with a time series.

In an embodiment, the controller includes logic to generate a synthetic data set from the actual process data, the actual motion data, and the workplace data.

In an embodiment, the controller also includes an emulator component configured to generate a digital twin of the material processing application based on the synthetic data set.

In an embodiment, the controller is communicatively coupled with at least a first input device and a second input device. The first input device is operable via a first programming language including first motion or process commands, and the second input device is operable via a second programming language including second motion or process commands. The controller also includes a decryption component configured to decrypt the first programming language and the second programming language, and commonize the first programming language and the second programming language into a common programming language utilized to execute the material processing application.

In an embodiment, the common programming language includes planned motion parameters and planned process parameters.

In an embodiment, the controller also includes a motion trajectory component and a process trajectory component. The motion trajectory component is configured to receive motion commands associated with the planned motion parameters, and the process trajectory component is configured to receive process commands associated with the planned process parameters. The motion trajectory component is also configured to define the motion commands relative to a time series, and the process trajectory component is configured to define the process commands relative to the time series.

In an embodiment, the artificial intelligence model includes a first mathematical model and a second mathematical model. The controller utilizes the first mathematical model to determine the adjusted motion parameters based on the actual motion data, and the second mathematical model to determine the adjusted process parameters based on the actual process data.

In accordance with another embodiment, a material processing system includes a robot, a welding source, and a controller. The controller is operatively connected to the robot and to the welding source. The controller includes logic to receive sensor data from the robot and the welding source in real time and generate process parameters and motion parameters based on the sensor data via an artificial intelligence model. The controller also includes logic to transmit the process parameters and the motion parameters to the welding source and to the robot to achieve a performance target.

In an embodiment, the sensor data comprises actual process data and actual motion data.

In an embodiment, the artificial intelligence model includes a deep learning neural network including an input layer, at least one hidden layer, and an output layer. The input layer receives the sensor data, and the output layer generates adjusted process parameters and adjusted motion parameters to achieve the performance target.

In accordance with another embodiment, a material processing method includes receiving actual process data and actual motion data from welding equipment or cutting equipment, and generating, via a controller, adjusted process parameters and adjusted motion parameters based on the actual process data and the actual motion data. The method also includes transmitting the adjusted process parameters and the adjusted motion parameters to the welding equipment or the cutting equipment in real time.

In an embodiment, the welding equipment includes at least one of a robot, a laser source, a power source, a welding torch, and a positioner, and the cutting equipment includes at least one of a cutting torch, a laser source, a cutting table, a cutting torch, a plasma source, or an oxygen/fuel source.

### BRIEF DESCRIPTION OF THE DRAWINGS

The foregoing and other aspects of the invention will become apparent to those skilled in the art to which the invention relates upon reading the following description with reference to the accompanying drawings, in which:
FIG. 1 illustrates a schematic block diagram of a control system for a robotic welding operation, in accordance with an embodiment;
FIG. 2 illustrates a weld joint shown in relation to an example sensor in the form of an image capturing device, in accordance with an embodiment;
FIG. 3 illustrates a schematic block diagram of a control system for a material processing application, in accordance with a further embodiment;
FIG. 4 illustrates a schematic block diagram of a control system for a material processing application, in accordance with another embodiment.
FIG. 5 illustrates an example welding robot disposed about an example hexapod actuator, in accordance with an embodiment;
FIG. 6 is a flowchart illustrating an example method of optimizing operating parameters to achieve a performance target, in accordance with an embodiment; and
FIG. 7 is a flowchart illustrating an example method of optimizing process and motion parameters to achieve a performance target for a welding application, in accordance with an embodiment.

### DETAILED DESCRIPTION OF THE INVENTION

The present disclosure relates to material processing operations, and in particular a control system configured to optimize operating parameters (e.g., process parameters and motion parameters) for such operations to achieve a desired performance attribute (e.g., a desired productivity or repeatability , etc.) based on sensor data retrieved from the material processing operation in real-time. While certain embodiments of the present disclosure are described in the context of automated gas metal arc welding (GMAW) applications, the disclosure is not limited thereto. For example, certain embodiments may also be applied to other material processing applications, including, but not limited to, semi-automated GMAW applications, or semi-automated or fully automated gas tungsten arc welding (GTAW), flux core arc welding (FCAW), metal core arc welding (MCAW), additive 3D manufacturing, hardfacing, laser welding, cladding, thermal cutting processes (e.g., mechanized plasma cutting, laser cutting, oxy-fuel cutting), as well as assembly operations, for example, robotic pick-and-place operations. It is also contemplated that the various inventions disclosed herein may be adapted for use in other types of manufacturing operations, such as machining (e.g., CNC machining), water jet cutting, casting, plastic injection molding, and the like.

The present disclosure will now be described with reference to the drawings, wherein like reference numerals are used to refer to like elements throughout. It is to be appreciated that the various drawings are not necessarily drawn to scale from one figure to another nor inside a given figure, and in particular that the size of the components are arbitrarily drawn for facilitating the understanding of the drawings. In the following description, for purposes of explanation, numerous specific details are set forth in order to provide a thorough understanding of the present disclosure. It may be evident, however, that the present disclosure may be practiced without these specific details. Additionally, other embodiments of the present disclosure are possible, and the various inventions disclosed herein may be capable of being practiced and carried out in ways other than as described. The terminology and phraseology used in describing the present disclosure is employed for the purpose of promoting an understanding of the various inventions disclosed herein, and should not be taken as limiting.

As used herein, "at least one," "one or more," and "and/or" are open-ended expressions that are both conjunctive and disjunctive in operation. For example, each of the expressions "at least one of A, B and C," "at least one of A, B, or C," "one or more of A, B, and C," "one or more of A, B, or C" and "A, B, and/or C" means A alone, B alone, C alone, A and B together, A and C together, B and C together, or A, B and C together. Any disjunctive word or phrase presenting two or more alternative terms, whether in the description of embodiments, claims, or drawings, should be understood to contemplate the possibilities of including one of the terms, either of the terms, or both terms. For example, the phrase "A or B" should be understood to include the possibilities of "A" or "B" or "A and B."

"Controller," as used herein, refers to the logic circuitry and/or processing elements and associated software, programs, or artificial intelligence models utilized to execute the disclosed methodologies and systems disclosed herein. The controller may include a processor and a storage device, and may take on various forms, for example, a workstation, server, computing cluster, blade server, server farm, or any other data processing system or computing device. Due to the ever-changing nature of computing devices and networks, the description of the various examples of a controller described herein, and depicted in the associated drawings, is intended only as an example for purposes of illustrating some embodiments. Many other configurations of the controller are contemplated to fall within the scope of the present disclosure.

"Component," as used herein can be defined as a portion of hardware, a portion of software, or a combination thereof. A portion of hardware can include at least a processor and a portion of memory, wherein the memory may include instructions to execute a software program. A component may be associated with a device.

"Logic," synonymous with "circuit" as used herein, includes but is not limited to hardware, firmware, software and/or combinations of each to perform a function(s) or an action(s). For example, based on a desired application or needs, logic may include a software-controlled microprocessor, discrete logic such as an application specific integrated circuit (ASIC), or other programmed logic device and/or controller. Logic may also be fully embodied as software.

"Processor," as used herein includes, but is not limited to, one or more of virtually any number of control systems or stand-alone processors, such as microprocessors, microcontrollers, central processing units (CPUs), suitable integrated circuit(s), one or more field programmable gate arrays (FPGAs), one or more application-specific integrated circuits (ASICs), one or more digital signal processors (DSPs), and/or any combination thereof. The processor may be associated with various other circuits that support operation of the processor, such as random access memory (RAM), read-only memory (ROM), programmable read-only memory (PROM), erasable programmable read-only memory (EPROM), clocks, decoders, memory controllers, or interrupt controllers, etc. These support circuits may be internal or external to the processor or its associated electronic packaging. The support circuits may be in operative communication with the processor.

"Signal," as used herein includes, but is not limited to, one or more electrical signals, including analog or digital signals, one or more computer instructions, a bit or bit stream, or the like. The term "signal" may correspond with "data" and "information" communicated from one device or component to another.

"Software," as used herein, includes but is not limited to, one or more computer readable and/or executable instructions (e.g., stored on local machine readable media or on a server) that cause a computer, processor, logic, and/or other electronic device to perform functions, actions, and/or behave in a desired manner. The instructions may be embodied in various forms such as routines, an algorithm, an artificial intelligence model, modules, or programs including separate applications or code from dynamically linked sources or libraries.

Referring now to the drawings, an example control system 10 for an automated GMAW welding system is shown. The control system 10 is configured to dynamically adjust operating parameters to achieve a desired performance target, such as, for example, a desired uptime %, cycle time, throughput (e.g., parts or assemblies per hour) and/or a quality metric (e.g., a desired repeatability or dimensional tolerance). In general, the control system 10 may include a controller 20, an input device 50, and a sensor device 70. The controller 20 may be communicatively coupled to the input device 50 and configured to receive planned operating parameters for a welding operation executed by equipment 5 in a work cell. The equipment may include, but not be limited to, a welding source 2, a wire feeder 3, a welding controller, a robot controller, a hot wire power supply, a workpiece positioner 7, a wire positioner, a welding gun or torch 8, a nozzle positioner/cleaner, etc. For the purposes of this disclosure, the term "welding source" is intended to refer to a laser source or a power source for a welding application.

The planned operating parameters may include planned motion parameters and planned process parameters. The planned motion parameters may include, but are not limited to, position, velocity, acceleration, deceleration, jerk, a trajectory or path taken by a robotic arm 6 (e.g., an arm manipulating a welding gun). In an embodiment, a motion parameter may define a weave pattern for one or more welds, etc. The planned motion parameters may also pertain to other pieces of equipment utilized to execute the welding operation, for example, the motion of a positioner 7 configured to manipulate one or more workpieces 12 secured thereto, or the controlled oscillation of a laser beam (e.g., the "wobble" of a laser). In further embodiments, the planned motion data may define motion parameters for other types of equipment (e.g., a wire feeder, a torch cleaner, or a material handling robot, etc.).

The planned motion parameters may be defined according to a planned or predefined time sequence (e.g., a time series) specifying the planned motion parameters at various stages of the welding operation. For example, the time series may define motion and process parameters for: a first stage of placing and securing a workpiece onto the positioner 7, a second stage of moving the positioner to a weld position, a third stage of moving the robotic arm 6 into to the weld position, a fourth stage of moving the robotic arm 6 along a predetermined path to create one or more welds, a fifth stage of returning the robotic arm 6 to a home position, and a sixth stage of removing the workpiece (e.g., via a material handling robot). In such embodiments, the time series may be measured in microseconds (µs), milliseconds (ms), seconds, hours, days, hours, or months.

The planned process parameters may include, but are not limited to, parameters associated with the welding process. Various non-limiting examples include cycle time, duty cycle, welding process type (e.g., gas metal arc welding - GMAW; gas tungsten arc welding - GTAW; flux-cored arc welding - FCAW; shielded metal arc welding - SMAW, etc.), welding wire type and size (e.g., diameter), wire feed speed, waveform, output current, output voltage, trim value, stick-out length, contact-tip-to-work distance, polarity (direct current electrode positive - DCEP; direct current electrode negative - DCEN), deposition rate, transfer mode (e.g., short circuit, globular transfer, spray transfer, pulse-spray transfer, etc.), weld joint configuration (e.g., a corner weld, a butt weld, etc.), workpiece material type, laser source settings, wire feeder setting(s), welding gun setting(s), remote current/voltage setting(s), shielding gas parameters (e.g., shielding gas flow rate, composition (e.g., 100% CO₂ , Argon/CO₂ blend, etc.)).

The planned process parameters may also be defined relative to the same time series as the motion parameters are assigned to. For example, a planned process parameter (e.g., welding current, wire feed speed) may be specified at a specific point in the time series where a planned motion parameter is also assigned. This allows for coordinated control of the planned process parameters (e.g., current and wire feed speed) with the planned motion parameters (e.g., position, velocity, acceleration, deceleration, trajectory or path) relative to the same time series for conducting the welding operation.

While the above example planned motion and planned process parameters relate to a robotic GMAW welding operation, it should be understood that such parameters may differ according to the type of material processing operation being performed. For instance, planned motion parameters for a thermal cutting process may include planned motion parameters or planned process parameters for a robotic or mechanized cutting operation. For example, the planned motion parameters may include, but are not limited to, a cutting torch path or trajectory, cutting velocity, and/or the position or orientation of the cutting torch relative to a workpiece or worktable. Whereas the planned parameters may include, but are not limited to, pierce time, cutting current, feed rate, cutting depth, standoff distance, cutting or assist gas characteristics (e.g., composition, flow rate, pressure, etc.) and the like. As another example, the planned motion parameters for an assembly operation may specify the path, position, velocity, acceleration, deceleration, trajectory, or a path taken by a robotic arm, for example, to pick up a workpiece from one location, and transport it to another (e.g., to a robotic welding fixture or position). In this manner, it should be understood that the various inventions disclosed herein may be applicable to a wide variety of manufacturing and assembly processes.

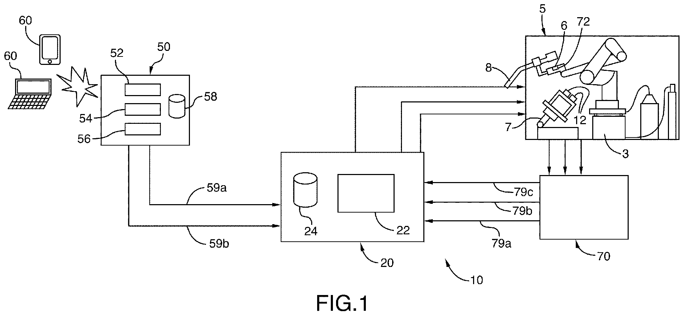

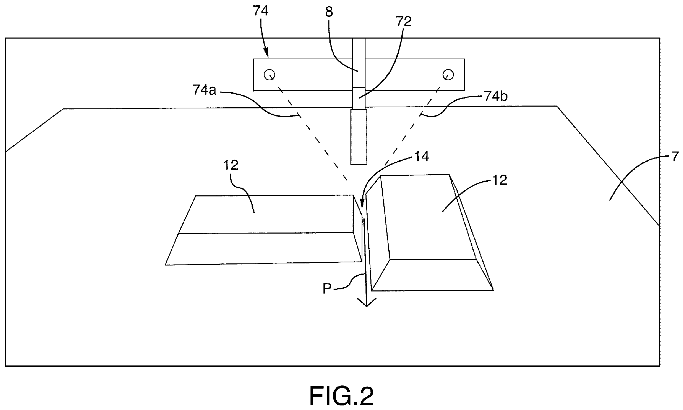

In some embodiments, the controller 20 may be configured to dynamically determine some or all the planned motion and/or planned process parameters based on acquired data, such as, for example, three-dimensional spatial data or depth-enhanced visual data. In certain embodiments, the controller 20 may acquire the spatial data from a sensor, which in the illustrated embodiment represents an image capturing device 72. For the purposes of this disclosure, "spatial data" may include any data or dataset representing the spatial characteristics of an object, including but not limited to point clouds, 2D or 3D images, videos, depth maps, two-dimensional or three-dimensional coordinate measurements, and the like. In such embodiments, the image capturing device 72 may be disposed on the arm 6 of the robot (see, e.g., FIG. 1) or on a welding gun 8 attached thereto (see, e.g., FIG. 2). The image capturing device 72 may embody a two-dimensional or a three-dimensional camera (e.g., a stereo camera), a laser tracking device, a laser scanning device (e.g., a high-fidelity laser scanner), a LiDaR sensor, or any other suitable example of an image capturing device 72 disclosed herein.

As shown in FIG. 2, the image capturing device 72 may be configured to detect and scan a weld joint 14 to assess the fit-up between two workpieces 12. This may include, for example, measuring a gap between the workpieces along a planned weld path P of the weld joint 14, or determining the distance between a welding gun (e.g., the contact tip thereof) and the workpiece along a vertical axis. In such embodiments, the controller 20 may utilize the spatial data to define motion parameters, such as the trajectory of the robotic arm 6 and/or the welding gun/torch attached thereto. For example, the trajectory may define a weave pattern for making a weld between workpieces via a welding gun, or a path followed by the welding gun. In some embodiments, the controller 20 may utilize the spatial data to determine planned process parameters. For example, the controller 20 may utilize the spatial data to determine an electrode stick out distance, a contact tip to work distance, or a welding joint configuration. In further embodiments, the controller 20 may utilize the spatial data to determine information regarding the workpiece(s) to be welded, such as the joint gap or the dimensions of the workpieces (e.g., thickness, length, width, etc.). In this manner, the spatial data may be used to derive workpiece-related information (e.g., herein referred to as "workpiece data" or "workpiece information"). In some embodiments, the controller 20 may determine planned process parameters (e.g., current, voltage, and the like) based on the workpiece data. For this purpose, the controller 20 may reference a lookup table (e.g., stored in the storage device 24 or in a remote server) that defines pre-determined motion or process parameters corresponding to the spatial data acquired by the image capturing device 72.

The input device 50 may comprise a control panel or a remote device (e.g., a smart phone, tablet, pendant, laptop) with a user interface 52. The user interface 52 may comprise a graphical display operable to enter, upload, and/or modify the planned motion and planned process parameters. In some embodiments, the user interface 52 may include, for example, one or more control knobs, buttons, sliders, touch pads (or screens), cameras for visual command recognition or for image capture (e.g., of a tag or QR code on a scanned part/workpiece to be welded), a keyboard, a pointing device (e.g., a mouse, a trackball, a touchpad), a graphics tablet, a scanner, audio input devices (e.g., voice recognition devices, microphones, etc.) and/or other types of known input devices that facilitate communication between a user and the control system 10.

In some embodiments, the input device 50 may be operable to receive software comprising the planned motion and process parameters, for example, via a communication component 54 that enables wireless communication between the input device 50 and other input devices, for example, one or more remote devices 60 (e.g., laptops, cell phones, etc.) operable to enter or upload the software. The communication component 54 may include physical and/or logical interfaces for connecting the input device 50 to the one or more remote devices 60 or another network. For example, the communications component 54 can enable Wi-Fi-based communication such as via frequencies defined by the IEEE 802.11 standards, short-range wireless frequencies such as Bluetooth^{®}, cellular communication (e.g., 2G, 3G, 6G, 6G LTE, 5G, etc.) or any suitable wired or wireless communications protocol that enables one or more remote devices to communicate with the control system 10. In some embodiments, communication component 54 may include cellular network cards, a token ring, FDDI, arc net, or other examples of dedicated network interface cards.

In some embodiments, the input device 50 may comprise physical interfaces to upload, enter, or modify planned motion and process parameters, for example, a USB interface, serial interface, or wired interface (e.g., ethernet, fiber optic interfaces), and the like. In some embodiments, the input device 50 may include an encryption component 56 operable to encrypt the planned motion and process parameters for data security and/or privacy purposes (e.g., to secure the privacy of customer data). The input device 50 may also include a storage device 58 operable to store the planned motion and process parameters in memory. In various implementations, the memory can be implemented using any suitable memory technology, such as static random-access memory (SRAM), synchronous dynamic RAM (SDRAM), nonvolatile/flash-type memory, or any other type of memory capable of storing information. In certain embodiments, the input device 50 may be communicatively coupled to a remote, cloud-based server to store the planned motion and process parameters.

In the embodiment shown, the input device 50 is shown as a separate component communicatively coupled with the controller 20 and configured to supply one or more data streams thereto (e.g., via a system bus comprising physical/wired connections). In some embodiments, the input device 50 may form part of the controller 20, or may be communicatively coupled with the controller 20 via a communication component (e.g., like 56) permitting wireless communication therebetween. In the embodiment shown, the input device 50 transmits a first data stream 59a comprising planned motion parameters, and a second data stream 59b comprising planned process parameters. It should be understood that the first and second data streams 59a and 59b may be transmitted to the controller 20 via a single data stream or connection (instead of two). It is also contemplated that the input device 50 may transmit three or more data streams associated with different types of planned operating parameters

Still referring to FIG. 1, the sensor device 70 may comprise one or more sensors configured to measure and acquire sensor data from a downstream material processing operation. The sensor device 70 may also include a data acquisition system (DAQ), a data logger, a programmable digital multimeter, or another suitable device configured to acquire, store, and time-stamp the sensor data in real time. In some embodiments, the sensor device 70 may include a system clock (e.g., a real-time clock) configured to automatically attach time stamps to the acquired sensor data (e.g., UNIX time, date-time string, or relative time in milliseconds). The sensor device 70 may be operatively connected to the work cell 5 (or facility) to measure and retrieve sensor data acquired from one or more downstream processes (e.g., a downstream robotic welding or cutting process) in real-time. For the purposes of this disclosure, "real-time" may embody real time or near real-time (e.g., accounting for network latency (e.g., milliseconds, seconds, etc.)). The sensor data may comprise actual motion data, actual process data, and workplace data associated with external factors that may cause deviations in the welding (or cutting) processes, e.g., deviations between one weld produced by the work cell 5 and another produced thereby, or variations in cut quality, for example.

The workplace data may include, but is not limited to, workpiece data, supply data, and environment data. Supply data may pertain to the tools, supplies, or equipment. For example, the supply data may pertain to welding equipment, including, but not limited to, a welding source (i.e., a welding power source or laser source), hot wire power source, robot, torch, gun, wire, wire feeder, torch cleaner, shielding gas supply or other components). In other embodiments, the supply data may pertain to cutting equipment, including, but not limited to, a laser source, a plasma source, a cutting table or gantry, a robot, a torch, or an oxygen-fuel supply source). The supply data may include equipment status information, for example, indicating whether a power source, laser source, wire feeder, robot, positioner, or other peripheral device is fully operational or experiencing a fault due, e.g., a fault attributed to a component failure). Supply data may also include technical specifications associated with each piece of equipment, tools, or supplies. For instance, supply data may define the update rate or communication frequency of one or more robots.

Environment data may comprise data associated with the surrounding environment (e.g., temperature, humidity, air quality, etc.).

Workpiece data may comprise information about the properties or physical characteristics of one or more workpieces to be welded (e.g., material dimensions, alloy composition, shape, etc.). As noted above, the workpiece data may be derived from spatial data acquired by a sensor in the form of an image capturing device 72.

In some embodiments, the image capturing device 72 may take on various forms, including, but not limited to, a LiDaR sensor, an ultrasonic sensor, infrared (IR) distance sensor, camera (2D or 3D), laser tracker, or laser scanning device (e.g., a high-fidelity laser scanner). In further embodiments, the image capturing device 72 may embody a stereo 3D camera 74 (FIG. 2) with two fields of view 74a and 74b, enabling the generation of three-dimensional images of one or more workpieces. In this manner, the image capturing device 72 may embody an appropriate configuration to acquire any suitable example of spatial data disclosed herein. In some embodiments, the image capturing device 72 may be disposed on the robot arm or on the robotic welding gun (or on a cutting torch). In some embodiments, image capturing device 72 may be arranged in another location of the work cell 5 (e.g., on a wall adjacent to or enclosing the work cell 5, as shown in FIG. 2). For example, the image capturing device 72 may be configured to capture images (from two fields of view) to generate a 3D representation of the broader scene, including, the positioner, robot arm, welding gun (or cutting torch), and workpiece(s).

As shown in FIG. 2, the image capturing device 72 may be configured to detect and scan a weld joint 14 to acquire information about one or more workpieces derived via the spatial data. For example, the controller 20 may utilize the spatial data to determine workpiece data, including, but not limited to, two-dimensional or three-dimensional coordinates or dimensions of the workpiece(s) or weld groove(s), joint dimension(s) and geometry (e.g., joint type), workpiece gap dimensions, texture or surface roughness characteristics, position and/or orientation of a welding gun/torch (e.g., a contact tip thereof) or a cutting torch relative a workpiece (e.g., including distance therebetween or spatial coordinates thereof), an electrode stick-out distance, arc length, positioning of the workpieces relative to a worktable or positioner, as well as other physical characteristics. In some embodiments, the controller 20 may comprise a 3D dimensioner configured to determine the dimensions of the workpiece(s) based on the spatial data. Additionally or alternatively, the controller 20 may utilize a deep learning neural network (e.g., a convolutional neural network) to transform the spatial data (supplied as inputs to the network) into outputs, defining pixel coordinates of the workpiece or surrounding environment, for example.

Returning to FIG. 1, the sensors of the sensor device 70 may be configured to retrieve other examples of workpiece data. For example, the sensors may include an infrared digital thermometer or a thermal imager (to ascertain the location of a heat affected zone, or a temperature of a workpiece). The sensors may also include proximity sensors (e.g., inductive, optical, capacitive, magnetic, or ultrasonic proximity sensors) configured to detect the presence of the workpiece relative to the welding gun/torch, or cutting torch, for example. In further embodiments, the controller 20 may be communicatively coupled with a storage device or cloud-server, defining workpiece information before commencing the material processing application, for example, workpiece material type, thickness, joint configuration (e.g., a corner weld, a butt weld, etc.), material type (of the workpiece), etc. In this embodiment, the controller 20 may adjust the workpiece information based on the workpiece data it receives (via an artificial intelligence model).

In some embodiments, the sensors may include an environment sensor to ascertain environment data, for example, the ambient temperature or humidity of the workplace environment, or sensors (e.g., electrochemical, analyzers, catalytic diffusion sensors, or other known gas sensors) for detecting the presence of certain gases (e.g., carbon monoxide, flammable gases, ozone, etc.) or contaminants in the air.

The sensor device 70 may also include sensors configured to capture actual motion data in real-time (e.g., of the robot arm, welding gun or cutting torch, positioner, or workpiece), for example, via one or more rotary encoders, or inertial measurement units (comprising accelerometers, gyroscopes, magnetometers). The inertial measurement units may be configured to measure linear acceleration, rotational velocity, and orientation in 3D space. For example, the inertial measurement units may capture and record data associated with the motion of the robot arm, the welding gun (e.g., of a weave pattern thereof), or another welding tool or accessory associated with the welding operation. In some embodiments, the sensors may include tilt sensors or yaw-rate sensors, for measuring pitch and roll.

In addition, the sensors may include sensors for retrieving actual process data in real time from equipment operatively connected to the controller, including, but not limited to, welding process data transmitted from the welding equipment 5.

Still referring to FIG. 1, the sensors may include, but not be limited to, a voltmeter, a shunt resistor (for measuring current), a hall-effect or current transformer (e.g., clamp-on for measuring current), an arc-voltage probe, an oscilloscope (to ascertain the waveform). For laser welding applications, the sensors may include, but not be limited to, a laser power meter, beam profiler, a beam alignment sensor, photodiode, and the like,

The actual process data may include, but not be limited to, cycle time, duty cycle, welding process type (e.g., gas metal arc welding - GMAW; gas tungsten arc welding - GTAW; flux-cored arc welding - FCAW; shielded metal arc welding - SMAW, etc.), welding wire type, wire size (e.g., diameter), wire feed speed, waveform, output amperage, output voltage, trim value, wire stick out length, contact-tip-to-work distance, polarity (direct current electrode positive - DCEP; direct current electrode negative - DCEN), deposition rate, transfer mode (e.g., short circuit, globular transfer, spray transfer, pulse-spray transfer, etc.), wire feeder setting, welding gun setting, remote amperage control setting, remote voltage control setting, shielding gas flow rate, shielding gas composition (e.g., 100% CO₂ , Argon/CO₂ blend, etc.), laser power, or any other example of process data or process parameters disclosed herein. In some embodiments, the sensor device 70 may include a sensor (e.g., a laser scanner, infrared camera, acoustic emission sensor, etc.) configured to measure the weld penetration of one or more welds. In some embodiments, the sensor device 70 may include an optical scanner (or any other suitable example disclosed herein) for monitoring the weld appearance, e.g., bead shape/height. In some embodiments, the scanner may include an acoustic scanner configured to monitor the sound of the weld (e.g., spatter level deviations indicative of a quality problem). It should be understood that the actual process data may differ according to the type of material processing application performed. For example, as noted above, the actual process data for a thermal cutting application may comprise data regarding a cutting amperage, assist gas flow rate/pressure, and/or other examples disclosed herein. In some embodiments, the actual process data and the actual motion data may include the actions and responses of the welding or cutting equipment operatively connected to the controller 20. In further embodiments, the process data may relate to laser welding parameters, or hot wire power source parameters.

The sensor device 70 may receive the sensor data, and communicate the sensor data (i.e., the workplace data, actual motion data, actual process data) to the controller 20, in real-time.

In the embodiment shown, the sensor data is shown as being transmitted in first, second, and third data streams 79a, 79b, and 79c, respectively, for transmitting workplace data, actual motion data, and actual process data to the controller 20. Although it is contemplated that the data streams may be combined into a single data stream (instead of three). The data stream(s) may be transmitted to the controller 20 via a system bus (e.g., comprising physical / wired connections). It is also contemplated that the sensor device 70 may transmit the sensor data to the controller 20 wirelessly, for example, via a communications component (e.g., like 56 discussed above). In some embodiments, the sensor device 70 may communicate the sensor data to a remote-storage device, or a cloud-based server for subsequent retrieval by the controller 20. In the embodiment shown, the sensor device 70 is shown as a separate component relative to the controller 20. It is contemplated that the sensor device 70 may form part of the controller 20. In some embodiments, the sensor data may be transformed into a suitable format that the controller 20 may process, for example, numerical vectors for scalar sensors, time-series tensors, pixel arrays, etc.

Still referring to FIG. 1, the controller 20 may include a processor 22 comprising logic to determine and execute adjusted process and adjusted motion parameters based on the sensor data to achieve a performance target, for example, a desired throughput (e.g., a desired repeatability, cycle time for a welded assembly comprising one or more welds, uptime %, or target quantity of parts or assemblies produced per hour). In other embodiments, the performance target may pertain to a quality metric, for example, a desired first pass yield, a reduced defect or scrap rate, desired weld penetration, weld characteristics such as no porosity or slag, an acceptable weld profile, bead shape, or part tolerance, etc.). In particular, the processor 22 may predict the adjusted process and adjusted motion parameters utilizing an artificial intelligence model that accounts for external factors, for example, deviations in the workplace environment (e.g., workplace data acquired by the sensor device 70, etc.), or deviations in the actual motion data and process data, for example, relative to the planned motion and planned process parameters. The artificial intelligence model may embody a supervised, artificial neural network (e.g., a deep learning neural network comprising an input layer, one or more hidden layers, and an output layer). In further embodiments, the artificial neural network may embody a convolutional neural network (for image processing), a RNN/LSTM/transformer (for time series patterns), or a reinforcement learning model (for control optimization). In some embodiments, the artificial intelligence model may embody an unsupervised model (wherein the inputs to the model are not categorized or defined, etc.). The input layer may be configured to receive some or all the planned operating data (i.e., the planned motion and process data) and the sensor data (the workplace data, the actual process data, and the actual motion data) as inputs to detect patterns in the sensor data it receives based on external factors (aforementioned deviations revealed by the sensor data). For example, the external factors may be attributed to deviations in workplace data, for example, deviations in the materials being processed, joint configurations, material dimensions, material shapes, gas supply, welding gun and gun components, the ambient environment, the wire supplied for the welding application, and/or any example of a deviation that may be revealed by the sensor data. For instance, the artificial neural network may utilize the sensor data as an input to predict adjustments to certain process parameters (e.g., current, voltage, wire feed speed, deposition rate) that are more impactful for attaining a desired performance target (e.g., a requisite throughput or weld quality metric). As a non-limiting example, the artificial neural network may predict a higher voltage, decreased travel speed (e.g., by a robot), a weave technique, or increased wire feed speed to perform a weld on a joint that defines a wide gap (to ensure that the joint is properly filled and joined). In some embodiments, the controller may determine the dimensions and geometry of the wide gap based on spatial data (e.g., captured by the image capturing device) to derive workpiece data/information in real-time. In this manner, the controller 20 may detect the wide gap, and adjust the process parameters (e.g., voltage, travel speed, weave technique, wire feed speed) based on the workpiece data in real-time by transmitting the workpiece data/information to the input layer of the artificial neural network, and predicting the adjusted process parameters via the output layer thereof . Although the foregoing example pertains to adjusting process parameters and motion parameters for welding in a wide gap, it should be understood that the controller may adjust such parameters when welding in a narrow gap (e.g., based on the spatial data), for example, by modifying the process parameters to define a straight bead, reduced wire feed speed, lower voltage, or increased travel speed ( wherein such modifications are predicted via the artificial neural network).

The artificial neural network may also utilize sensor data for other purposes, for example, to solve an optimization problem that reduces robot arm travel time, or to discover an optimal robot arm path that enhances overall throughput in distinction to a planned robot arm path. In some instances, the artificial neural network may produce generative content, for example, work instructions (e.g., to a welder performing a semi-automated welding application). It is contemplated that the generative content may be transmitted in the form of a video or audio recording. In such embodiments, the instructions may be transmitted in the native language of the individual performing the welding operation (e.g., to display or play instructions in the welder's native language). In some embodiments, the controller 20 may provide feedback that a person can feel (e.g., haptic feedback via a welding or cutting torch or via a welding or cutting helmet) when a certain condition is present (e.g., when sensor data reveals that the air quality is no longer suitable for welding or cutting). It is also contemplated that the instructions may direct the welder to adjust the torch angle or travel speed. In such embodiments, the instructions may be derived from the artificial neural network's predictions or recommendations to implement adjusted motion parameters to achieve a desired/performance target. In some embodiments, the instructions may be provided via indicator lights (e.g., indicating when the travel speed or angle is suitable, or when such parameters are outside of a permissible range).

In some embodiments, the artificial neural network may be supplemented by other forms of machine learning (e.g., deep Q networks) to make predictive insights regarding how the inputs or decision variables (e.g., process data, motion data, workplace data) impact achieving the desired performance target (e.g., throughput or repeatability) based on the sensor data it receives. It is also contemplated that the artificial neural network may be cloud-based, such that it may wirelessly receive sensor data and send adjusted process parameters and adjusted motion parameters to the controller 20 (e.g., via a communication component) to control the welding operation (e.g., to achieve the desired performance target. In some embodiments, the weights of the artificial neural network may be optimized during a supervised learning process, and optimal model weights (e.g., for a given welding or cutting application) may be saved to a storage device 24 or to a remote cloud-based server for subsequent retrieval. In some embodiments, the artificial neural network may utilize backpropagation to tune the weights of the network to improve prediction accuracy (to reduce errors in the weights and biases of the network) and/or to determine how each weight contributed to an error (e.g., based on a deviation between a predicted data value and a target data value). In this manner, the controller 20 may utilize the artificial intelligence model (e.g., a deep learning neural network) to identify an optimal set of weights to achieve a desired performance target via the decision variables of the model (e.g., via the adjustable motion and/or process parameters).

Further still, each layer of the artificial neural network may have one or more nodes, each connected to every node in a following layer and to every node in a previous layer (where applicable). The nodes in the input layer can represent features corresponding to the sensor data (e.g., the actual process data, actual motion data, or workplace data, etc.). For example, one node may represent a characteristic of the welding joint, for example, that a welding joint is a butt joint. In this example, assigning a value of 1 to that node may represent that the joint is a butt-weld joint, and assigning a value of 0 may represent that the joint is not a butt weld joint. It is also contemplated that one or more input nodes may correspond to a part dimension, a pixel (in an image), and/or other aspects of the sensor data (i.e., the workplace data, actual process data, or actual motion data). Each node in the hidden layers can receive an outputted value from the nodes in a previous layer (e.g., input layer) and associate each of the nodes in the previous layer with a weight. Each hidden node can then multiply each of the received values from the nodes in the previous layer with the weight associated with the nodes in the previous layer and output the sum of the products to each node in the next layer. And nodes in the output layer may receive and process input values received from the nodes in the hidden layer in a similar fashion. Example outputs in the output layer can include predictions/recommendations, for example, predictions/recommendations for the adjusted process parameters and/or the adjusted motion parameters, that when executed by the controller, will achieve a performance target. In another non-limiting example, the artificial neural network may receive the sensor data (as inputs) paired with a performance target (e.g., a desired productivity or quality metric) and generate adjusted process and/or adjusted motion parameters that when executed by the controller 20, will achieve the performance target.

In this manner, the controller 20 can control the welding process (or cutting process) by applying or otherwise executing the adjusted process and/or motion parameters (by transmitting motion or process commands to the equipment operatively connected thereto) to achieve the desired performance target, in real-time. In some embodiments, the artificial neural networks may be hosted on one or more servers and data stores, leveraging a cloud-based deep learning infrastructure with artificial intelligence to analyze actual motion data, actual process data, and workplace data in real-time. In some embodiments, the controller 20 may commence a material processing application using nominal settings (e.g., planned motion parameters and/or planned process parameters), which the controller 20 may modify to generate adjusted motion or adjusted process parameters/data (e.g., on-the-fly) based on sensor data it receives.

In some embodiments, controller 20 may store the adjusted process and/or motion parameters in a storage device 24 or on a cloud-based server, and retrieve these parameters according to a predefined time sequence or time series. For example, the controller 20 may retrieve a specific subset of the adjusted motion parameters and adjusted process parameters at each stage of a welding operation. The controller 20 may also retrieve the adjusted process parameters and adjusted motion parameters during a subsequent welding operation, for example, when it is desired to weld the same type of work assembly in the future. In other embodiments, the adjusted process parameters and the adjusted motion parameters may be stored on a remote server or data store for retrieval by the controller over a wireless network, for example, WAN, LAN, LoRaWAN, NB-IoT, etc.

In some embodiments, the controller 20 may adjust the process and/or motion parameters to continue a material processing operation at a reduced speed (e.g., reduced throughput) in response to detecting a component failure in the equipment via the sensor data, for example, a component failure in the robot, positioner, wire feeder, gun/torch, laser source, power source, or other peripheral devices associated therewith. In these embodiments, the controller 20 may adjust the process and/or motion parameters (via the artificial neural network) to maintain the material processing operation at a reduced throughput accounting for the component failure. For instance, to the extent that a robot becomes inoperable in one of its axes (e.g., one of its 6 axes), the controller 20 may adjust the motion parameters to complete the material processing operation using the remaining axes, albeit with an increased cycle or takt time due to the limited range of motion. As another example, if a welding system cannot maintain a target deposition rate (e.g., due to a wire-feeder malfunction), then the controller 20 may detect this condition via the sensor data (e.g., supply data) to determine adjusted process parameters (e.g., adjusted wire feed speed) to continue the welding operation at a reduced deposition rate. As another example, the sensor data may receive a sound signal (e.g., captured via an acoustic sensor) identifying a certain component failure (e.g., a faulty gear on positioner). In such an example, the controller 20 may decrease the velocity of the welding robot to maintain throughput (at a reduced rate to compensate for the component failure), instead of ceasing production entirely. It is also contemplated that the various inventions disclosed herein may be applied to other forms of manufacturing, for example, an assembly line wherein a conveyor is not operating at full capacity based on a component failure somewhere along the line. In such an example, the various inventions disclosed herein may enable the assembly line to adjust process parameters (e.g., a robot's material handling speed, etc.) to compensate for the component failure and maintain production at a lower throughput than expected (instead of ceasing production). Advantageously, this aspect of the present disclosure enables continued operation despite a component failure, thereby avoiding production stoppages. In certain implementations, a manufacturer may elect to sustain output at a reduced throughput, rather than halt production entirely.

In some embodiments, the artificial neural network may receive an input specifying a performance target comprising a requisite level of productivity or quality as dictated by a customer. For example, the neural network may receive an input indicating that an intermediate level of quality is acceptable for a particular customer (e.g., permitting greater part tolerances, increased deviation in weld consistency, bead profile, weld penetration, etc.) in order to achieve a higher throughput requirement (e.g., to meet a required ship date). In this manner, the artificial neural network may adjust its weights to target the specified level of quality while achieving the increased throughput, for example, by minimizing the error between its predictions and actual target values for achieving the requisite level of quality and throughput). In this manner, the artificial neural network may map its recommended actions to the control variables of the system, e.g., the adjusted motion and/or process parameters to achieve the requisite level of quality and throughput. In some embodiments, the training data for the artificial neural network may be derived from actual process and/or motion data (e.g., obtained during a previous material processing operation). In other embodiments, the training data may instead be generated within a simulated or virtual material processing environment, as further discussed below.

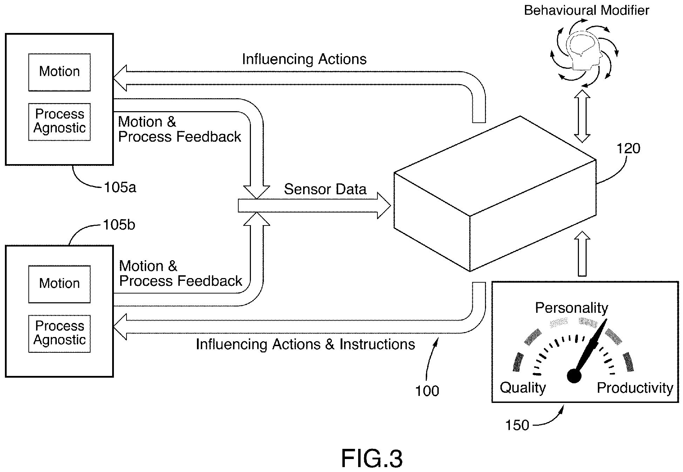

As shown in FIG. 3, another example control system 100 is shown, wherein the input device 150 is operable to define a desired balance between quality and throughput. In the example shown, productivity is illustrated as being prioritized over quality. It is contemplated that the input device 150 may be operable to receive other user inputs (e.g., an increased quality level, a required throughput level, a required dimensional quality (e.g., repeatability, tolerance, penetration, etc.) via any example of a user interface or control panel disclosed herein. In some embodiments, the controller 120 may execute a specific artificial intelligence model (e.g., comprising a mathematical model, depicted in the example as a behavioral modifier) corresponding to the desired level of quality or productivity. For instance, the controller 120 may recall a specific mathematical model (e.g., a specific artificial neural network) previously determined to provide optimal part quality. It should be understood that the controller 120 may also recall a specific model tailored to the type of manufacturing being performed, for example, a specific mathematical model for a fully automated welding application 105a, or a mathematical model for a semi-automated welding application 105b. In such embodiments, the inputs to each model may differ. For example, a model for a semi-automated GMAW welding application will not receive actual motion data for a robot arm as an input, since the welding gun is manually controlled by an operator.

In some embodiments, the desired performance target may be defined in other ways, for example, to reduce an operating cost (e.g., welding supply cost reduction, gas cost reduction, spatter reduction, etc.), or to achieve some other initiative (e.g., to enhance safety or decrease emissions for applications that emit pollutants or contaminants in the air). In some examples, the various insights and patterns learned by the artificial intelligence model may reveal errors or issues that an engineer or production manager had not previously considered, that may be insightful in the future when designing or developing a new welding or cutting system.

As noted above, the controller 120 may implement or otherwise execute the adjusted motion and/or process parameters to achieve the desired or target performance attribute via commands sent to a welding system (e.g., shown as influencing actions in FIG. 2). The commands corresponding to the adjusted motion parameters, may include, for example, signals transmitted to a robot (e.g., to change a robot's path). The commands corresponding to the adjusted process parameters may include, for example signals transmitted to a welding power source (e.g., to adjust a current or voltage setting), a laser source (e.g., to adjust power), or a wire feeder (to adjust a wire feed speed), etc. In some embodiments, the adjusted motion parameters may include an adjusted velocity, acceleration, jerk, and/or torque. It is also contemplated that the commands may be sent to a variety of other pieces of equipment, for example, a positioner (e.g., to change the inclination or motion thereof), to a cutting table (e.g., to change a cutting speed, cutting depth (or kerf/width)), to a gas supply system to adjust an assist gas for a laser cutting application, to adjust a spray gun/atomizer for a painting operation (the paint deposition rate based on the type and shape of material to be painted), or a motorized grinder or sander for a sanding or grinding operation (e.g., to adjust a grinding speed when sensor data reveals the presence of contaminants on the surface of a workpiece). In this manner, it should be understood that various inventions disclosed herein may be applicable to a wide variety of manufacturing operations. In some examples, the commands may relate to predicting and recommending fluid flow rates (e.g., for a coolant supplied to a welding torch to dissipate heat away from the welding torch). In such examples, the controller 20 may utilize computational fluid dynamics to determine an optimal flow rate based on sensor data (e.g., temperature data, flow data, or based on the type of welding torch (rating) used for the application).

In some embodiments, the artificial intelligence model may comprise constraints, for example, limitations or restrictions on the decision variables (e.g., the process or motion parameters) utilized for the manufacturing application. For example, a robot arm travel may be confined to a certain speed, reach, or axes of freedom (dictated by the robot model). Other non-limiting examples of constraints may include a maximum wire feed rate (dictated by the type of wire feeder employed), or a maximum current level (e.g., dictated by the welding power source employed).

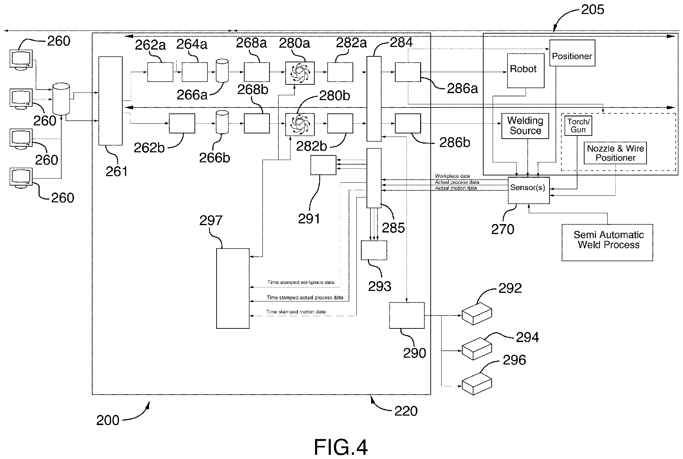

Turning now to FIG. 4, another example control system 200 will now be described. A description of similar features has been omitted for brevity, such that the following description is directed at differences in this embodiment.

In the example shown, the controller 220 is configured to receive input data from one or more remote devices 260 (comprising software applications) configured to supply the planned operating parameters (planned process and motion parameters) to the controller 220. Each of the remote devices 260 may comprise a specific software/interface language. For instance, an automated welding application (e.g., for additive 3D metal printing) may utilize a different software or interface language than a software or interface language utilized for a mechanized thermal cutting application. Further still, the controller 220 may include a decryption component 261 configured to decrypt the software language (e.g., encrypted commands it receives) to facilitate secure communication between the controller 220 and the remote devices 260. In some embodiments, the decryption component 261 may also be configured to commonize the software and/or interface languages (e.g., associated with a welding system, associated with a cutting system, associated with a robot, etc.) into a single or common software and/or interface language for use by the controller 220. For instance, the decryption component 261 may commonize the planned motion and planned process parameters (received from various remote devices) into one software and/or interface language after it decrypts the software language. Although, it should be appreciated that the order may be reversed, wherein the languages are first commonized and then decrypted. In this manner, the controller 220 may be configured to interface and communicate with a variety of different remote devices and software apps for various applications (e.g., thermal cutting, material handling, automated welding, etc.), irrespective of the native software and/or interface language associated therewith. For example, the decryption component can be communicatively coupled with at least a first input device and a second input device. The first input device may be operable via a first programming or interface language comprising first motion or process commands, and the second input device may be operable via a second programming or interface language comprising second motion or process commands. The decryption component may be configured to decrypt the first programming language and the second programming language, and commonize the first programming language and the second programming language into a common programming language. The common programming language may comprise the planned motion and planned process parameters for the material processing application, associated with the first motion or process commands (derived from a first programming language), and associated with the second motion or processing commands (derived from the second programming language).

The controller 220 may also include a motion planner component 262a and a process planner component 262b. The motion planner component 262a may identify and extract all expected motion commands based on the planned motion parameters (e.g., arcs, trajectories), for example, motion commands taken by equipment 205 operatively connected to the controller 220, including, but not limited to, a robot, positioner, a welding source, or welding gun or cutting torch.

In some embodiments, the motion planner component 262b may be communicatively coupled with a remote device 260 and configured to identify where certain weld paths are located within a welded assembly (using a 3D model) and define motion commands therefor. It is also contemplated that the motion planner component 262b may comprise logic to convert certain planned trajectories or arcs to vectors.

The process planner component 262b may identify and extract all of the expected process commands based on the planned process parameters, for example process commands for a welding source, welding gun or torch, cutting table, a laser cutter, and the like.

The controller 220 may also include a profile planner component 264a, configured to define and extract other motion commands, for example, intricate motion commands that a welding torch must perform for a weave pattern during an additive manufacturing process. In some examples, the profile planner component 264a may send a command that a weld joint comprising a certain gap, should require a different weave technique and resulting motion to adequately fill in the joint. In the embodiment shown, the motion commands (for the planned motion parameters) and the process commands (for the planned process parameters) may be transmitted to buffer components 266a and 266b, respectively, configured to temporarily store the respective commands for subsequent retrieval, for example, a first-in / first-out buffer wherein the data/commands are processed in the same order they were received..

The controller 220 may also include a motion trajectory component 268a and a process trajectory component 268b. The motion trajectory component 268a is configured to pull the motion commands from the buffer component 266a (e.g., one at a time) and convert the planned motion commands (e.g., the geometrical paths taken, acceleration, deceleration, etc.) from points in space to a time series. In embodiments, the motion trajectory component 268a may define the motion commands (derived from the planned motion parameters) over the time series. In some embodiments, this may include defining certain motion parameters, including, but not limited to, jerk (e.g., the rate of change of an object's acceleration or deceleration over time), acceleration, velocity, and position, etc.. The process trajectory component 268b may be configured to define weld or cutting commands (e.g., derived from the planned process parameters) over the time series, i.e., the same time series that the motion commands are associated with. In certain non-limiting examples, this may include defining when a power source will direct current to the torch, or when a laser source will generate and direct a laser beam to a torch, or when the shielding gas will be supplied through the welding gun to shield a welding arc, etc. For instance, the welding source may direct current (or light) to the torch when the torch is moved to a starting position to begin a weld. In this manner, it should be understood that the process parameters (and corresponding commands) may be synchronized with the motion parameters (and corresponding commands) at each stage of a welding operation. Yet, in other embodiments, the process commands may be defined separately with respect to the motion commands (as two separate data streams running in parallel at each stage). The motion trajectory component and the process trajectory component may also receive information concerning the equipment or components operatively connected to the controller 220, e.g., information pertaining to the motion characteristics of the robot or other equipment, or the process (e.g., current, voltage) capabilities of the welding source, for example. For example, in certain non-limiting examples, motion trajectory component 268a may be configured to retrieve the update rate or communication frequency of one or more robots.

The controller 220 may also include first and second mathematical models 280a and 280b). The first mathematical model 280a may comprise a first artificial intelligence model (e.g., a first deep learning neural network) associated with optimizing motion parameters to achieve a performance target, and the second mathematical model 280b may comprise a second artificial intelligence model (e.g., a second deep learning neural network) associated with optimizing process parameters to achieve the performance target. The first and second mathematical models 280a and 280b may receive sensor data from a storage device 297 or remote or cloud-based server (communicatively coupled with the first and second mathematical models 280a and 280b) to determine adjusted motion parameters and adjusted process parameters to achieve the desired performance target (e.g., a repeatability, uptime, or cycle time target requirement). The sensor data may embody data that is acquired by the sensors of the sensor device 270 in real time and may embody any example of sensor data disclosed herein.

The controller 220 may also include a motion command composer 282a and a process command composer 282b. The motion and process command composers 282a and 282b may be configured to generate motion and process commands (based on the planned motion and process parameters, or the adjusted motion and process parameters) with consideration toward the signal interfaces of the equipment (e.g., robot, welding source, torch, positioner) operatively connected to the controller 220. For instance, the motion command composer 282a may build commands in the form of a programming language utilized by the robot. In some instances, this may require translating commands from one language to another. The process command composer 282b may similarly be configured to build commands in the form of communication protocol or interface language associated with the equipment, e.g., an ArcLink^{®} communication protocol for a Lincoln Electric welding system.

The controller 220 may also comprise a sync component 284, configured to synchronize the motion commands and the process commands over a time series (controlled by a system clock). For instance, the sync component 284 may determine that certain commands cannot be executed simultaneously, ensuring that such commands are staged (e.g., delayed) until results from previous commands are available. The sync component 284 may also be configured to take into account the command or update frequency receipt capabilities of the equipment, e.g., the time frequency (milliseconds/time) a robot can take commands. The controller 220 may also comprise a motion command component 286a and a process command component 286b configured to transmit the motion and process commands to the equipment 205 (e.g., positioner, robot, a nozzle and wire positioner, a manual or robotic torch, welding source (e.g., laser source or power source), a wire feeder, etc.) according to the time series defined for the welding application. In some embodiments, the motion and/or process commands may embody ethernet commands (e.g., serial commands) transmitted to the equipment via control signals. In the embodiment shown, the equipment 205 encompasses welding equipment. It should be understood that the equipment may encompass cutting equipment, for instance, any example of cutting equipment disclosed herein.

The controller 220 may also include other features, for example, a synchronizer component 290 configured to interface with a plurality of different manufacturing operations. Each of the different manufacturing operations may be operatively connected to a respective controller (e.g., 292, 294, 296). The controllers 292, 294, and 296 may comprise the same structure and functionality as controller 220 such that all of the controllers 220, 292, 294, and 296 may communicate according to the same communication protocol.

The control system 200 may include a sensor device 270 comprising one or more sensors configured to receive sensor data (e.g., workplace data, actual motion data, actual process data) and transmit the sensor data to the controller 220 in real-time. The sensors may take on any suitable form, for example, any example of a sensor disclosed herein. In this manner, the controller 220 may comprise logic to receive and process the sensor data, and determine adjusted motion and process parameters, accordingly, for example, via the first and second mathematical models 280a and 280b. For instance, the controller 220 may control motion parameters such as jerk (i.e., a differentiated acceleration), acceleration (i.e., a differentiated velocity), or velocity (i.e., a differentiated position). Likewise, the controller may control process parameters, for example, a welding amperage, wire feed speed, voltage, or any other suitable example of a process parameter disclosed herein. In certain embodiments, the control system 200 may be configured to refresh the adjusted process parameters and motion parameters based on a predetermined frequency, including, but not limited to, about every 10, 100, or 500 nanoseconds, about every 10, 100, or 500 microseconds, about every 10, 100, or 500 microseconds, about every 10, 100, or 500 milliseconds, about every 10, 100, or 500 centiseconds, or about every 10, 30, or 60 seconds, for example. In some embodiments, the predetermined frequency may be determined or constrained by the frequency of the sensor readings. In some embodiments, the sensor data, actual process data, and actual motion data may be interpolated to correspond to the same time series, for example, such that the controller 220 adjusts the process and/or motion parameters based on sensor data (i.e., actual process data, actual motion data, and/or workpiece data) measured or interpolated to correspond at the same command transmittal point in time, for example, to implement the adjusted process or motion parameters at the same point in time, including, but not limited to, about every 100 microseconds, about every 500 microseconds, and/or any other suitable example of a predetermined frequency.

The controller 220 may also include a time-stamping component 285 communicatively coupled with the sensor device 270. The time-stamping component 285 may be configured to receive and timestamp the sensor data (e.g., actual process data, actual motion data, and workplace data) for subsequent retrieval. In some embodiments, the time stamping component 285 may be configured to associate a high-resolution temporal reference markers (e.g., precise points or measurements in time, for example, accurate to microseconds or milliseconds) for actual process data, actual motion data, workplace data, and/or other events (e.g., actions and responses taken by the equipment 205) detected or otherwise retrieved via the sensors of the sensor device 270. In certain examples, the time stamping component 285 may be configured to assign time stamps with a temporal accuracy of approximately two microseconds (2 µs), thereby enabling precise chronological ordering of events occurring within the control system 200 and equipment 205 operatively connected thereto.

The time stamping component 285 may be communicatively coupled to one or more data storage systems. In certain embodiments, the data storage systems may embody local storage or remote data centers. The time-stamped sensor data may be stored as sequential time series datasets that preserve the order, frequency, and fidelity of the incoming sensor data. In some embodiments, the sensor data may be recorded at rates matching the operational sampling capabilities of the equipment 205, for example, matching the update frequencies of one or more robots operatively connected thereto.

The stored, time-stamped sensor datasets may be retrievable by a replay component 291 configured to reproduce the actions and responses (e.g., captured via telemetry/sensor data) of the equipment 205 and peripheral devices. In this manner, the replay component 291 may replay the actions and responses, including, but not limited to, actual process data, motion data, or workplace data (e.g., workpiece data, supply data, environment data) captured during a material processing application. For example, the control system 220 may reproduce, in temporal synchronization, the motion stages, process parameters, and peripheral device signals (e.g., in parallel with a time series) corresponding to a selected historical interval. The replay functionality of the replay component 291 may support times frames ranging from sub-second intervals (e.g., microseconds, milliseconds, etc.) to multi-year archival periods, allowing for post-event analysis without requiring the re-execution of the physical material processing operations.

In various embodiments, the replay operations may be performed in conjunction with a graphical visualization interface (e.g., facilitating dynamic spatial visualization, statistical visualization, or process parameter/data analytics visualization). In some embodiments, the graphical visualization interface may display the synchronized motion stages and corresponding process signals, enabling accurate reproduction of system behavior for diagnostic purposes, quality control, or optimization purposes. The replay component 291 enables the identification of performance degradations, cycle time deviations, and process anomalies with temporal precision, thereby facilitating root cause analysis and process improvement.

In addition to replaying historical data, the time stamping component 285 may be configured to generate and store synthetic datasets representing predicted process and motion profiles derived from historical sensor data acquired by the control system 200. The synthetic datasets may be supplied to a control system emulator component 293, to produce a high-fidelity digital twin of a physical or actual material processing application, e.g., a physical semi or fully automated welding or cutting system. In some embodiments, the emulator component 293 may be configured to reproduce the temporal and behavioral characteristics of the actual manufacturing system, enabling forward emulation (herein referred to as a "play" functionality) to predict performance outcomes prior to designing, producing, or integrating any equipment 205. The emulator component 293 may advantageously allow a user to create an emulated solution, wherein the emulation is tightly coupled to real world time constraints.

Synthetic and historical datasets may also be used to train predictive maintenance algorithms, self-healing control models, and behavioral models, allowing the control system 200 to forecast equipment performance without executing physical process operations.

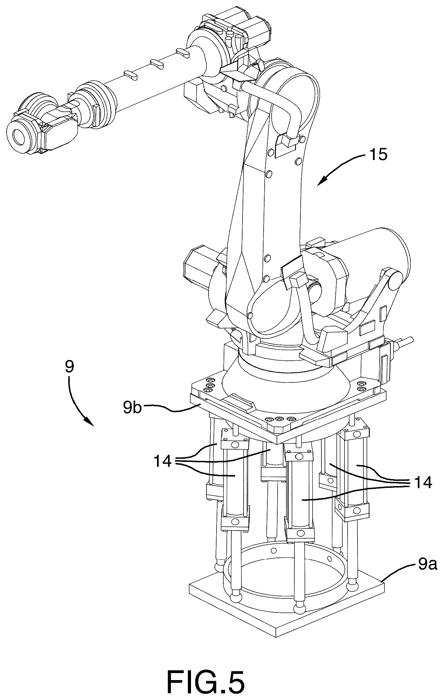

Turning now to FIG. 5, an example six-axis articulating robot 15 disposed on a hexapod actuator 9 is shown. The hexapod actuator 9 (also known as a Stewart platform) may comprise a moving platform 9b movable with six independent degrees of freedom. The hexapod actuator 9 has six linear actuators 14 which can be formed by small electric linear motors. The linear actuators 14 may extend between a proximal base portion 9a of the hexapod actuator and the moving platform 9b supporting the robot 6. Each linear actuator 14 has a leg that extends and retracts to control the spatial orientation of the moving platform (and therefore the robot). The moving platform 9b is movable by the linear actuators 14 with six degrees of freedom. In this manner, the hexapod actuator 9 may be configured to increase the range of motion of the robot 15 (to twelve degrees of freedom) to enable the robot 15 to weld in places, otherwise not feasible (e.g., based upon six degrees of freedom). This aspect of the present disclosure may be beneficial to increase the throughput and productivity of a material processing operation, for example, to assume motion paths that are shorter (and therefore faster) than those that can be taken by the robot itself. The movements of the hexapod actuator 9 may be controlled by the various examples of a controller disclosed herein based on adjusted motion parameters to optimize productivity or quality in a material processing application.

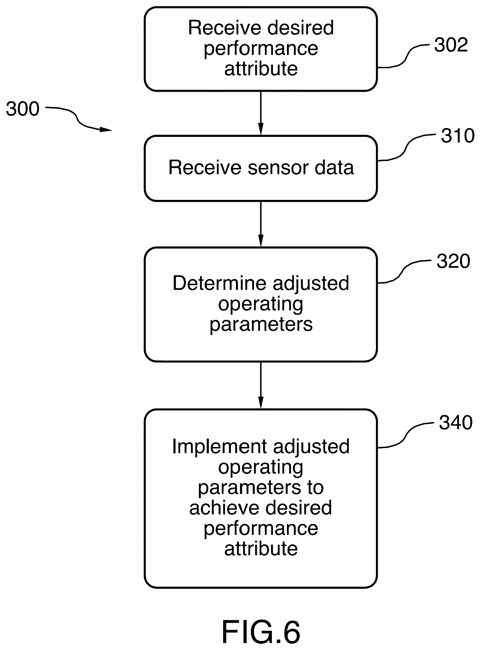

Turning now to FIG. 6, an exemplary method of controlling a material processing application is shown. The method may be carried out with any suitable combination of the apparatuses, systems, devices, components, and/or configurations disclosed above. While the following example is directed at optimizing a welding application, it should be understood that the following may be applied to other forms of manufacturing applications (e.g., thermal cutting, laser cutting, etc.).

At step 302, the method includes receiving a desired performance target (depicted as a performance attribute). This may include receiving information (e.g., via a controller) corresponding to the desired quality or productivity metrics for a material processing application. At step 310, the method includes receiving sensor data associated with the welding operation (e.g., workplace data, actual process data, and actual motion data). The retrieval of sensor data may be done in real-time. Step 310 may also include receiving planned process data (i.e., parameters) and planned motion data (i.e., parameters) for the material processing application.

At step 320, the method includes determining adjusted process parameters and adjusted motion parameters. Step 320 may be performed by a controller utilizing an artificial intelligence model (e.g., a deep learning neural network), with at least one of planned motion data, planned process data, actual motion data, actual process data, and workplace data as inputs to the model.

At step 340, the method includes implementing or otherwise executing the adjusted process parameters and adjusted motion parameters (e.g., via the equipment operatively connected to the controller (e.g., 20, 120, 220 etc.) to achieve the target quality (e.g., repeatability) metric and/or target productivity metric.

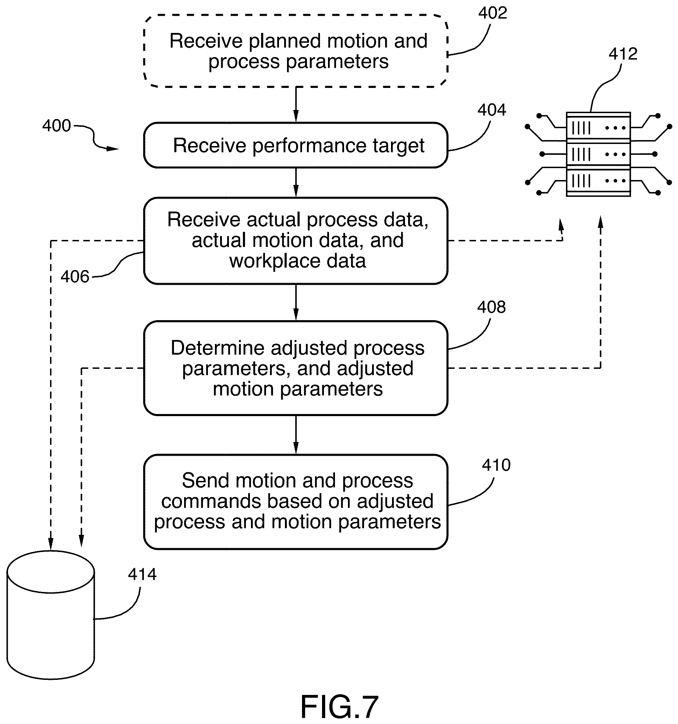

Referring to FIG. 7, another exemplary method for controlling a material processing application (e.g., a welding or cutting application) is shown. In one embodiment, at step 402, the method may include receiving planned motion and planned process parameters (e.g., from one or more input devices), including, but not limited to, a position, a velocity, an acceleration, a deceleration, a trajectory or path taken by a robotic arm 6 (e.g., an arm manipulating a welding gun). For example, a motion parameter may define a weave pattern for one or more welds, etc. The planned motion parameters may also pertain to other aspects of a welding application, for example, the motion (rotational axis, tilt, etc.) of a workpiece positioner, or any other suitable example of a motion parameter disclosed herein. In further embodiments, the planned motion parameters may define the motion of a laser welding torch, for example, the oscillatory motion of the laser beam (e.g., wobble).

The planned process parameters may include, but not be limited to, parameters associated with the welding application, for example, a cycle time, a duty cycle, a welding process type (e.g., gas metal arc welding - GMAW; gas tungsten arc welding - GTAW; flux-cored arc welding - FCAW; shielded metal arc welding - SMAW, etc.), a welding wire type, a wire size (e.g., diameter), a wire feed speed, a waveform, an output amperage, an output voltage, a trim value, wire stick out length, contact-tip-to-work distance, a polarity (direct current electrode positive - DCEP; direct current electrode negative - DCEN), a deposition rate, a transfer mode (e.g., short circuit, globular transfer, spray transfer, pulse-spray transfer, etc.) a welding joint configuration (e.g., a corner weld, a butt weld, etc.), a material type (of the workpiece), a wire feeder setting, a welding gun setting, a remote amperage control setting, a remote voltage control setting, a shielding gas flow rate, and a shielding gas composition (e.g., 100% CO₂, Argon/CO₂ blend, etc.). In other embodiments, the process parameters may pertain to laser parameters for a laser source to facilitate a laser welding application, e.g., power, wavelength, beam quality, spot, welding speed, or pulse parameters. In further embodiments, the process parameters may relate to hot wire power supply parameters (e.g., for resistively heating a welding wire).

At step 404, the method may include receiving a performance target, for example, via an input device. The performance target may pertain to a product throughput, quality metric (e.g., repeatability), or any other suitable example of a performance target or attribute disclosed herein. In certain embodiments, the performance target may embody a target wire feed speed, target takt or cycle time (for welding an assembly or one or more workpieces), a target deposition rate. Whereas in further embodiments, the performance target may relate to a yield, product/part conformance %, uptime %, cycle time, defect rate (for example, a number of parts or assemblies per 1000, per 100,000, or per 1,000,000).

In the embodiment shown, the planned motion parameters and planned process parameters are received before receiving the performance target. In certain embodiments, this may be reversed.

At step 406, the method may include receiving sensor data via a sensor device, for example, actual motion data, actual process data, and optionally actual workplace data, e.g., after commencing the welding application. The actual motion data, actual process data, and actual workplace data may represent any suitable example of a motion parameter/data, process parameter/data, or workplace data disclosed herein. In certain embodiments, the actual motion data, actual process data, and actual workplace data may be time stamped and recorded in a central server 412 or remote storage device 414, for example, for subsequent retrieval when it is desired to assess the actions and responses taken by the welding system (e.g., to facilitate the replay or play functionality as disclosed herein).

Step 406 may optionally include sending the actual process data, actual motion data, and actual workplace data to a remote server 412 or data storage device 414 for subsequent retrieval. This may be done via any suitable example of a telemetry device. In embodiments, the actual process data, actual motion data, and actual workplace data may be used as an input for an example play or replay functionality, as discussed above.

At step 408, the method includes determining adjusted process parameters and adjusted motion parameters based on the actual process data, actual motion data, and workplace data. This may be done, for example, via a controller (e.g., 20, 120, 220) receiving the actual process data, actual motion data, and actual workplace as an input to an artificial intelligence model (e.g., a deep learning neural network). The artificial intelligence model may include an input layer, one or more hidden layers, and an output layer. In such embodiments, the controller (via the output layer) may predict recommended process and motion parameters based on the actual process data, actual motion data, and optionally the actual workplace data it receives (e.g., in real-time) to achieve the performance target. In some embodiments, this may be done, for example, via neurons of the hidden layers (by applying a weighted sum of its inputs), adding a bias, and applying a non-linear activation function. In further embodiments, this may be done by minimizing an error (e.g., mean squared error, mean absolute error, and the like).

Step 408 may optionally include sending the adjusted process parameters and adjusted motion parameters to a remote server 412 or data storage device 414 for subsequent retrieval. This may be done via any suitable example of a telemetry device. In embodiments, the adjusted process parameters and adjusted motion parameters may be subsequently utilized for the play or replay functionality disclosed herein.

At step 410, the method includes sending motion and process commands to the equipment (e.g., welding power source, laser source, hot wire power supply, robot, positioner, welding gun, etc.) to implement the adjusted motion and adjusted process parameters in real time, e.g., to achieve the performance target. The motion and process commands may be derived from or embody the adjusted motion parameters and adjusted process parameters. In embodiments, the equipment (e.g., 5, 105a, 105b, or 205) may embody equipment for other example applications, for example, cutting equipment including at least some or all of a cutting torch, a laser source, a cutting table, a plasma source, or an oxygen/fuel gas supply controller. It should be evident that this disclosure is by way of example and that various changes may be made by adding, modifying or eliminating details without departing from the fair scope of the teaching contained in this disclosure. The invention is therefore not limited to particular details of this disclosure except to the extent that the following claims are necessarily so limited.

## Claims

1. A control system for a material processing application comprising:
a sensor device configured to receive actual motion data and actual process data from equipment performing the material processing application; and
a controller comprising logic to:
determine, via an artificial intelligence model, adjusted motion parameters and adjusted process parameters based on the actual motion data and the actual process data; and
transmit the adjusted motion parameters and the adjusted process parameters to the equipment to achieve a performance target.

2. The control system of claim 1, wherein the artificial intelligence model is a neural network comprising an input layer, at least one hidden layer, and an output layer.

3. The control system of claim 1 or 2, wherein the sensor device is further configured to receive workplace data during the material processing application, and wherein the controller further comprises logic to determine the adjusted motion parameters and the adjusted process parameters based on the actual motion data, the actual process data, and the actual workplace data;
preferably wherein the workplace data comprises at least one of a: workpiece data, supply data or environment data.

4. The control system of any one of the preceding claims, wherein the equipment comprises at least one of a robot, a hexapod actuator, a torch, a positioner, a power source, a laser source, a cutting table, a cutting torch, a plasma source, or an oxygen/fuel source.

5. The control system of any one of the preceding claims, wherein the sensor device comprises an image capturing device configured to retrieve spatial data, and wherein the controller comprises logic to determine workpiece information based on the spatial data and/or determines planned motion parameters and planned process parameters via the spatial data.

6. The control system of any one of the preceding claims, wherein the controller comprises logic to:
produce generative content embodying work instructions based on the adjusted motion parameters or the adjusted process parameters; and/or
generate a synthetic data set from the actual process data, the actual motion data, and the workplace data; preferably wherein the controller further comprises an emulator component configured to generate a digital twin of the material processing application based on the synthetic data set.

7. The control system of any one of the preceding claims, wherein the controller further comprises a time stamping component configured to receive and time stamp the actual process data and actual motion data for subsequent retrieval.

8. The control system of any one of the preceding claims, wherein the sensor device is further configured to receive workplace data during the material processing application, and wherein the controller further comprises:
a replay component configured to reproduce the actual process data, the actual motion data, and the workplace data in temporal synchronization with a time series.

9. The control system of any one of the preceding claims, wherein the controller is communicatively coupled with at least a first input device and a second input device, wherein the first input device is operable via a first programming language comprising first motion or process commands, and wherein the second input device is operable via a second programming language comprising second motion or process commands, and wherein the controller further comprises:
a decryption component configured to decrypt the first programming language and the second programming language, and commonize the first programming language and the second programming language into a common programming language utilized to execute the material processing application;
preferably wherein the controller further comprises:
a motion trajectory component and a process trajectory component, wherein the motion trajectory component is configured to receive motion commands associated with the planned motion parameters, and wherein the process trajectory component is configured to receive process commands associated with the planned process parameters, and wherein the motion trajectory component is configured to:
define the motion commands relative to a time series, and wherein the process trajectory component is configured to define the process commands relative to the time series.

10. The control system of any one of the preceding claims, wherein the artificial intelligence model comprises:
a first mathematical model and a second mathematical model, wherein the controller utilizes the first mathematical model to determine the adjusted motion parameters based on at least the actual motion data, and the second mathematical to determine the adjusted process parameters based on at least the actual process data.

11. A material processing system comprises:
a robot and a welding source; and
a controller operatively connected to the robot and to the welding source, wherein the controller comprises logic to:
receive sensor data from the robot and the welding source in real time;
generate process parameters and motion parameters based on the sensor data via an artificial intelligence model; and
transmit the process parameters and the motion parameters to the welding source and to the robot to achieve a performance target.

12. The material processing system of claim 11, wherein the sensor data comprises actual process data and actual motion data.

13. The material processing system of claim 11 or 12, wherein the artificial intelligence model comprises a deep learning neural network including an input layer, at least one hidden layer, and an output layer, wherein the input layer receives the sensor data, and wherein the output layer generates adjusted process parameters and adjusted motion parameters to achieve the performance target.

14. A material processing method comprises:
receiving actual process data and actual motion data from welding equipment or cutting equipment;
generating, via a controller, adjusted process parameters and adjusted motion parameters based on the actual process data and the actual motion data; and
transmitting the adjusted process parameters and the adjusted motion parameters to the welding equipment or the cutting equipment in real time.

15. The material processing method of claim 14, wherein welding equipment comprises at least one of a robot, a hexapod actuator, a welding source, a workpiece positioner, a nozzle positioner, a wire positioner, a welding torch, and wherein the cutting equipment comprises at least one of a cutting torch, a laser source, a cutting table, a cutting torch, a plasma source, or an oxygen/fuel source.
